# Europäisches Patentamt
# European Patent Office
# Office européen des brevets

(19)

(11) Numéro de publication: **0 125 486 B1**

(12)

# FASCICULE DE BREVET EUROPEEN

(45) Date de publication du fascicule du brevet:
**07.01.87**

(51) Int. Cl.⁴: **B 01 J 15/00, C 04 B 35/58**

(21) Numéro de dépôt: **84103970.4**

(22) Date de dépôt: **10.04.84**

(54) Procédé de fabrication de pièces ou poudres en un composé de silicium ou d'un métal, par réaction de pièces ou de poudres de silicium ou d'un métal à l'état solide sur un gaz.

(30) Priorité: **13.04.83 FR 8305993**

(43) Date de publication de la demande:
**21.11.84 Bulletin 84/47**

(45) Mention de la délivrance du brevet:
**07.01.87 Bulletin 87/2**

(84) Etats contractants désignés:
**BE CH DE FR GB IT LI NL SE**

(56) Documents cités:
**EP - A - 0 027 639**
**EP - A - 0 075 841**
**US - A - 3 854 882**

**AMERICAN CERAMIC SOCIETY BULLETIN, vol. 57, no. 5, mai 1978, COLUMBUS, Ohio (US) P. WONG et al.: "Procedure for fabrication of Si3N4 by rate-controlled reaction sintering", pages 525-526**
**AMERICAN CERAMIC SOCIETY BULLETIN, vol. 60, no. 6, juin 1981, COLUMBUS, Ohio (US) J.A. MANGELS: "Effect of rate-controlled nitriding and nitriding atmospheres on the formation of reaction-bonded Si3N4", pages 613-617**

(73) Titulaire: **CERAVER Société anonyme dite:, 12, rue de la Baume, F-75008 Paris (FR)**
Titulaire: **ASSOCIATION POUR LA RECHERCHE ET LE DEVELOPPEMENT DES METHODES ET PROCESSUS INDUSTRIELS (ARMINES), 60, Boulevard Saint-Michel, F-75272 Paris Cédex 06 (FR)**

(72) Inventeur: **Broussaud, Daniel, 1 Résidence du Grimpé Villebon-sur-Yvette, F-91120 Palaiseau (FR)**
Inventeur: **Mustel, William, c/o Armines 60 Boulevard Saint-Michel, F-75006 Paris (FR)**
Inventeur: **Minjolle, Louis, 10, rue Jeanne d'Albret, F-65000 Tarbes (FR)**

(74) Mandataire: **Weinmiller, Jürgen et al, Lennéstrasse 9, D-8133 Feldafing (DE)**

## Description

La présente invention concerne un procédé de fabrication de pièces ou poudres en un composé de silicium ou d'un métal, par réaction exothermique de pièces ou poudres de silicium ou d'un métal à l'état solide sur un gaz, dans lequel on enregistre le débit différentiel ou la variation de pression du gaz réactif au contact de la pièce ou de la poudre, et l'on effectue la réaction à des températures croissantes en fonction du débit différentiel ou de la pression du gaz réactif. Elle s'applique notamment à la fabrication de pièces ou poudres en nitrure de silicium ou nitrure de silicium modifié (SiAlON), par réaction de pièces ou poudres riches en silicium sur un gaz riche en azote.

La réaction du silicium sur l'azote étant fortement exothermique, lorsque l'on fait réagir une atmosphère d'azote sur du silicium en adoptant une montée en température linéaire, la réaction s'emballe lorsque l'on dépasse une certaine température, de sorte que l'on dépasse la température de fusion du silicium, et que l'on obtient une pièce contenant du silicium libre résiduel et de gros pores, de densité apparente notablement plus faible que celle du nitrure de silicium obtenu après nitruration complète d'une pièce préformée en silicium. On observe des phénomènes analogues dans le cas de réactions exothermiques entre un métal à l'état solide sous forme de pièce préformée ou de poudre, et un gaz tel que l'azote ou l'oxygène.

On a cherché à remédier à cette difficulté en effectuant la réaction à des paliers successifs de température, en veillant à chaque palier à ne pas augmenter celle-ci tant que l'équilibre réactionnel ne paraît pas atteint. Un tel procédé ne permet d'obtenir une nitruration complète qu'au prix d'une durée excessive.

On a aussi proposé de maintenir à un niveau déterminé la pression d'azote au contact de silicium à nitrurer, et, une fois la réduction amorcée, de maintenir le température à un niveau déterminé jusqu'à ce que l'on n'observe plus de chute de pression de l'azote pendant une durée minimale, ce qui indique que la réaction est arrivée à l'équilibre. On porte alors la température à une valeur plus élevée et recommence l'opération par paliers successifs jusqu'à une température d'environ 1400°C, un peu inférieure au point de fusion du silicium. Bien que l'on obtienne ainsi une nitruration complète et des pièces de masse spécifique voisine de la valeur maximale théorique, l'opération reste longue.

La présente invention a donc pour but de procurer un procédé de fabrication de pièces ou poudres en un composé du silicium ou d'un métal, par réaction exothermique de pièces ou poudres de silicium ou d'un métal à l'état solide sur un gaz, notamment de pièces ou poudres de nitrure de silicium par réaction du silicium sur de l'azote ou un gaz riche en azote, qui soit rapide, mais évite tout emballement de la réaction et, tout au moins dans les phases initiales de la réaction, toute fusion du silicium ou de métal, cause de porosité dans les pièces à fabriquer. Elle a encore pour but de procurer un procédé qui s'adapte à la nitruration de pièces de grandes comme de petites dimensions.

Le procédé de l'invention est caractérisé en ce que l'on détermine au préalable un débit différentiel maximal ou une vitesse de chute de pression maximale du gaz réactif en fonction de la nature chimique des pièces ou poudres et éventuellement de la densité et des dimensions des pièces, et suspend la montée en température lorsque le débit différentiel ou la vitesse de chute de pression du gaz réactif atteignent la valeur maximale déterminée, au-delà de laquelle la réaction s'emballerait et ne permettrait pas d'obtenir une transformation complète des pièces ou poudres.

L'invention s'applique avantageusement à la nitruration de silicium additionné d'environ 6% en poids d'aluminium, ce qui permet d'opérer sans avoir à maintenir la pression partielle d'oxygène à des valeurs très faibles, et d'obtenir un produit nitruré résistant à l'oxydation.

On fixe dans ce cas de préférence la vitesse initiale de montée en température à environ 45°C/h dans l'intervalle 1050°-1450°C.

En fin de traitement, lorsque l'on observe une diminution du débit différentiel ou de la vitesse de chute de pression, entrainant une augmentation rapide de la température, on maintient avantageusement la température maximale atteinte pendant quelques heures pour obtenir une transformation tout à fait complète.

Il est décrit ci-après, à titre d'exemple et en référence aux figures du dessin annexé, un procédé de fabrication de pièces en nitrure de silicium par le procédé selon l'invention.

La figure 1 représente à titre de comparaison la consommation d'azote enregistrée au cours de la nitruration de pièces en silicium additionné de 6% en poids d'aluminium, de dimensions 20 × 30 × 30 mm, avec une montée lente en température, selon un procédé connu.

La figure 2 représente la consommation d'azote enregistrée lors de la nitruration des mêmes pièces en silicium additionné de 6% d'aluminium, avec contrôle de la température en fonction du débit différentiel, de façon à ne pas dépasser un débit différentiel maximal, selon le procédé de l'invention.

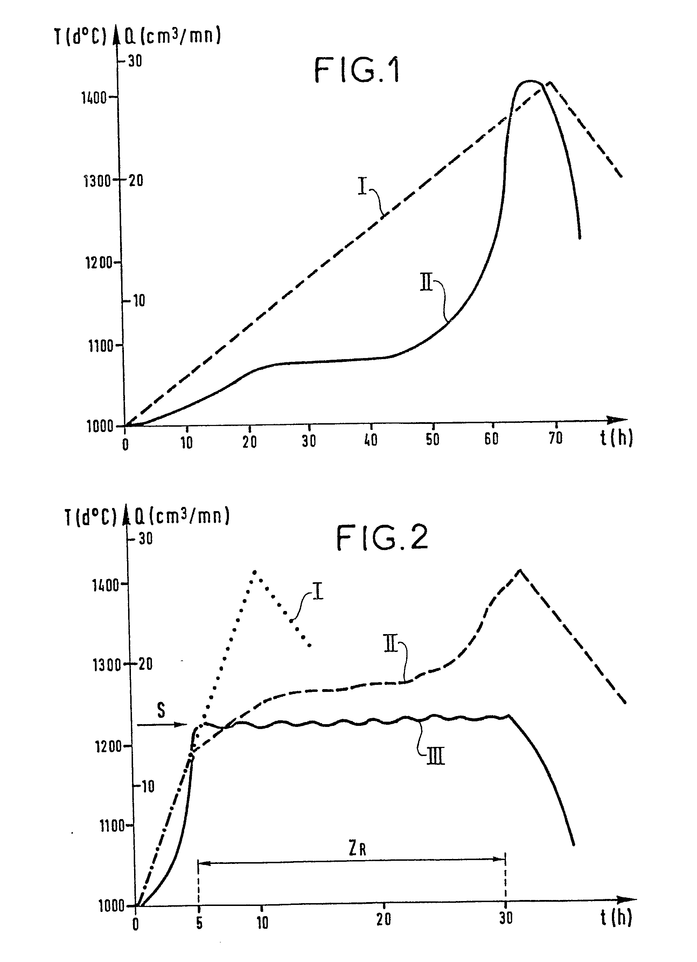

Dans la figure 1, la courbe I représente la variation de la température du four de nitruration en fonction du temps, et la courbe II la variation de la consommation d'azote (mesurée par la différence entre les débits d'azote à l'entrée et à la sortie du four de nitruration), au cours d'une nitruration à programme de montée lente linéaire en température du type connu.

On observe que la consommation d'azote, initialement faible, augmente brutalement lorsque la température atteint 1200°C, et passe par un maximum pour une température d'environ 1400°C, voisine de la température de fusion du silicium (1410°C). Il se produit alors en certains points des pièces, une fusion du silicium, qui bouche les pores et empêche l'azote de pénétrer jusqu'au coeur de celui-ci. L'examen micrographique révèle que le coeur des pièces comprend de nombreuses zones riches en silicium non nitruré, parfois fondu, de dimension de l'ordre de 100 microns. Par ailleurs, le temps nécessaire pour que la réaction se termine atteint environ 70 heures.

Dans la figure 2, la courbe I représente pour la nitruration des mêmes pièces le cycle de température programmé qui aurait lieu en l'absence de la régulation à un seuil maximal S du débit d'azote

consommé. La courbe II représente le cycle réel température-temps, compte tenu de cette régulation. La courbe III représente la variation en fonction du temps du débit d'azote consommé.

On effectue initialement une montée en température rapide, de façon à parvenir en 4 à 5 heures à environ 1050°C, température à laquelle la réaction de nitruration s'amorce. La régulation intervient alors pour limiter la montée en température de façon que le débit d'azote consommé, mesuré par la différence entre les débits entrant et sortant du four, ne dépasse pas 15 cm³/min. La température agmente donc lentement, puis plus rapidement en fin de réaction, pour atteindre environ 1400°C. Le débit d'azote consommé reste pratiquement constant dans toute la zone de temps $Z_R$ où intervient la régulation, plus diminue rapidement en fin de réaction. L'examen micrographique des pièces ne révèle que de rares zones riches en silicium non nitruré, de dimensions réduites, de quelques dizaines de microns au plus. La durée totale de la nitruration est d'environ 30 heures.

Le contrôle du débit d'azote consommé s'effectue à l'aide de débitmètres à l'entrée et à la sortie du four, le débit d'entrée étant maintenu constant par un régulateur muni d'une consigne. Les débitmètres sont reliés à un régulateur-programmateur dans lequel a été enregistrée une consigne de débit différentiel maximal, et qui agit sur des résistances de chauffage du four de façon à maintenir ce débit différentiel égal ou inférieur au maximum fixé.

Bien que le procédé de fabrication de pièces ou poudres en nitrure de silicium ou nitrure de silicium modifié qui vient d'être décrit ci-dessus paraisse la forme de réalisation préférable de l'invention, on comprendra que diverses modifications peuvent lui être apportées sans sortir du cadre de l'invention. En particulier, on pourrait effectuer la régulation par fixation d'une vitesse maximale de chute de pression d'azote dans le four. On pourrait utiliser un gaz de nitruration autre que de l'azote, par exemple un mélange d'azote et d'hydrogène, ou d'azote et d'un gaz rare (argon, hélium), ou d'azote et de monoxyde de carbone, ou de l'ammoniac. On peut appliquer le procédé à toute réaction exothermique solide-gaz où il est souhaitable de contrôler la consommation du gaz réactif, par exemple à la nitruration de poudres métalliques, telles que l'aluminium, ou à l'oxydation de poudres métalliques telles que le nickel.

### Revendications

1. Procédé de fabrication de pièces ou poudres en un composé du silicium ou d'un métal, par réaction exothermique de pièces ou poudres de silicium ou d'un métal à l'état solide sur un gaz, dans lequel on enregistre le débit différentiel ou la variation de pression du gaz réactif au contact de la pièce ou de la poudre, et l'on effectue la réaction à des températures croissantes en fonction du débit différentiel ou de la pression du gaz réactif, caractérisé en ce que l'on détermine au préalable un débit différentiel maximal ou une vitesse de chute de pression maximale du gaz réactif en fonction de la nature chimique des pièces ou poudres et éventuellement de la densité et des dimensions des pièces, et suspend la montée en température lorsque le débit différentiel ou la vitesse de chute de pression du gaz réactif atteignent la valeur maximale determinée, au-delà de laquelle la réaction s'emballerait et ne permettrait pas d'obtenir une transformation complète des pièces ou poudres.

2. Procédé selon la revendication 1, caractérisé en ce qu'en fin de traitement, lorsque l'on observe une diminution du débit différentiel ou de la vitesse de chute de pression, entraînant une augmentation rapide de la température, on maintient la température maximale atteinte pendant quelques heures pour obtenir une transformation tout à fait complète.

3. Procédé selon les revendications 1 ou 2, caractérisé en ce que l'on effectue la nitruration de pièces ou poudres de silicium additionné d'environ 6% en poids d'aluminium.

4. Procédé selon la revendication 3, caractérisé en ce que l'on fixe la vitesse initiale de montée en température à environ 45°C/heure.

### Patentansprüche

1. Verfahren zur Herstellung von Formkörpern oder Pulvern aus einer Silizium- oder Metallverbindung, durch exotherme Reaktion von Formkörpern oder Pulvern aus Silizium oder einem Metall im festen Zusand mit einem Gas, bei dem man den differentiellen Durchsatz oder die Druckveränderung des Reaktionsgases in Kontakt mit dem Formkörper oder dem Pulver registriert und die Reaktion bei Temperaturen durchführt, die in Abhängigkeit vom differentiellen Durchsatz oder dem Druck des Reaktionsgases steigen, dadurch gekennzeichnet, dass man zuerst einen maximalen differentiellen Durchsatz oder eine maximale Druckabfallgeschwindigkeit des Reaktionsgases in Abhängigkeit von der chemischen Beschaffenheit der Formkörper oder Pulver und eventuell der Dichte und der Masse der Formkörper bestimmt und den Temperaturanstieg abbricht, wenn der differentielle Durchsatz oder die Druckabfallgeschwindigkeit des Reaktionsgases den bestimmten Höchstwert erreichen, oberhalb dessen die Reaktion ausufern würde und es nicht ermöglichen würde, eine vollständige Umwandlung der Formkörper oder Pulver zu erhalten.

2. Verfahren nach Anspruch 1, dadurch gekennzeichnet, dass man am Ende der Behandlung, wenn eine Verringerung des differentiellen Durchsatzes oder der Druckabfallgeschwindigkeit beobachtet wird, die einen schnellen Anstieg der Temperatur bewirkt, während mehrerer Stunden die erreichte Höchsttemperatur aufrechterhält, um eine absolut vollständige Umwandlung zu erreichen.

3. Verfahren nach den Ansprüchen 1 oder 2, dadurch gekennzeichnet, dass man die Formkörper oder Pulver aus mit etwa 6 Gew.-% Aluminium angereichertem Silizium nitriert.

4. Verfahren nach Anspruch 3, dadurch gekennzeichnet, dass man die Ursprungsgeschwindigkeit des Temperaturanstiegs auf etwa 45°C pro Stunde festlegt.

## Claims

1. A method of manufacturing parts or powders made of a compound of silicon or of a metal by exothermally reacting parts or powders of silicon or a metal in the solid state with a gas, wherein the differential flow rate or the pressure variation of the reactive gas in contact with the part or the powder is sensed, and the reaction is performed at temperatures which increase as a function of said differential flow rate or pressure of the reactive gas, characterized in that at first, a maximum differential flow rate or a maximum speed of pressure drop of the reactive gas is determined as a function of the chemical nature of the parts or powders, and optionally as a function of the density and the size of the parts, and the rise in temperature is suspended when the differential flow rate or the speed of pressure drop of the reactive gas reaches the predetermined maximum value, beyond which the reaction would run away and prevent complete transformation of the parts or powders.

2. A method according to claim 1, characterized in that at the end of processing, when a reduction is observed in the differential flow rate or in the speed of pressure drop, causing a fast increase in temperature, the maximum temperature reached is maintained for several hours in order to ensure complete transformation.

3. A method according to claim 1 or 2, characterized in that parts or powders comprising silicon and about 6% by weight aluminium are nitrided.

4. A method according to claim 3, characterized in that the initial speed of temperature rise is fixed at about 45°C/hour.

FIG.1

FIG.2